# EUROPÄISCHE PATENTSCHRIFT

(11) **EP 1 607 176 B1**
(45) Veröffentlichungstag und Bekanntmachung des Hinweises auf die Patenterteilung: **08.10.2008**
(21) Anmeldenummer: 05012802.4
(22) Anmeldetag: 14.06.2005
(51) Int. Cl.: B23Q 7/04, B23Q 7/06, B23B 13/10, B23B 13/12

(54) **Verfahren zum Bearbeiten von Werkstückstangen**
Process for processing bar stock
Procédé pour usiner des pièces en forme de barre

(30) Priorität: 14.06.2004 DE 102004029046
(43) Veröffentlichungstag der Anmeldung: 21.12.2005
(73) Patentinhaber: Chiron-Werke GmbH & Co. KG, 78532 Tuttlingen (DE)
(72) Erfinder: Winkler, Hans-Henning, Dr., 78532 Tuttlingen (DE); Prust, Dirk, Dr., 78532 Tuttlingen (DE)
(74) Vertreter: Otten, Hajo

(56) Entgegenhaltungen:
- WO-A-98/08648
- DE-A1- 4 228 708
- DE-B- 1 299 482

## Beschreibung

Die vorliegende Erfindung betrifft ein Verfahren zum Bearbeiten von Werkstückstangen auf einer Werkzeugmaschine mit einer relativ zu einer Spannvorrichtung für die Werkstückstangen verfahrbaren Arbeitsspindel, in die Bearbeitungswerkzeuge einspannbar sind, mit den Schritten:
a) Einspannen einer Werkstückstange in die Spannvorrichtung derart, dass zumindest ein zu bearbeitender Werkstückabschnitt der Werkstückstange über die Spannvorrichtung übersteht,
b) Bearbeiten des Werkstückabschnittes mit zumindest einem Bearbeitungswerkzeug,
c) Abtrennen des insoweit bearbeiteten Werkstückabschnitts von der restlichen Werkstückstange,
d) Vorschieben der restlichen Werkstückstange, bis zumindest ein neuer Werkstückabschnitt über die Spannvorrichtung übersteht, und erneutes Einspannen der Werkstückstange,
e) Wiederholen der Schritte b) bis d), bis ein Endstück der in Bearbeitung befindlichen Werkstückstange entsteht, das mit Hilfe der als nächstes zu bearbeitenden Werkstückstange vorgeschoben wird.

Die Erfindung kann mittels einer Werkzeugmaschine zum Bearbeiten von Werkstückstangen mit einer relativ zu einer Spannvorrichtung für die Werkstückstangen verfahrbaren Arbeitsspindel durchgeführt werden, in die Bearbeitungswerkzeuge einspannbar sind.

Derartige Werkzeugmaschinen sind beispielsweise aus der DE 1 299 482, aus der WO 98/08648 A1 oder der DE 42 28 708 A1 bekannt. Auf den bekannten Werkzeugmaschinen wird das bekannte Verfahren durchgeführt.

An oder in der Nähe einer derartigen Werkzeugmaschine ist ein Magazin für Werkstückstangen vorgesehen, die der Reihe nach in eine Spannvorrichtung eingeschoben werden. Jede Werkstückstange wird so weit in die Spannvorrichtung eingeschoben, dass sie im Bereich des Arbeitsraumes der Werkzeugmaschine über die Spannvorrichtung zumindest mit einem Abschnitt vorsteht, der dem zu fertigenden Werkstück entspricht. Mit Hilfe von in die Arbeitsspindel einspannbaren Werkzeugen wird der einem zu fertigenden Werkstück entsprechende Abschnitt - im Folgenden: Werkstückabschnitt - bearbeitet. Hierzu kann entweder die Werkstückstange oder aber die Arbeitsspindel geschwenkt werden, um auch die Stirnseite des Werkstückabschnittes bearbeiten zu können und beispielsweise schräge Bohrungen anzubringen.

Sobald sämtliche Bearbeitungsvorgänge an dem Werkstückabschnitt vorgenommen wurden, wird dieser Werkstückabschnitt von der Werkstückstange abgetrennt und beispielsweise über eine Rutsche in einen Auffangbehälter geleitet. In anderen Fällen wird der Werkstückabschnitt vor dem Abtrennen von der Werkstückstange mit einer in Längsrichtung der Werkstückstange verschiebbaren Vorrichtung ergriffen, in der der Werkstückabschnitt nach dem Abtrennen verbleibt, so dass auch seine sechste Seite, also die soeben von der Werkstückstange abgetrennte Seite, noch bearbeitet werden kann.

In vielen Fällen ist ein Handhabungssystem vorgesehen, mit dem die fertig gestellten Werkstücke definiert auf einer Palette abgelegt werden.

Der Vorschub der in der Spannvorrichtung befindlichen Werkstückstange erfolgt in geeigneter Weise von hinten durch die Spannvorrichtung hindurch, beispielsweise durch eine KolbenZylindereinheit, die in Anlage mit dem hinteren Ende der Werkstückstange ist. Es sind aber auch Transportsysteme denkbar, die die Stange an ihrem hinteren Ende ergreifen und definiert durch die Spannvorrichtung schieben.

Bedingt durch die endliche Länge der Spannvorrichtung kann die Werkstückstange nur so lange auf diese Weise durch die Spannvorrichtung hindurchgeschoben werden, bis ein Endstück der Werkstückstange verbleibt, das nicht mehr auf die übliche Weise durch die Spannvorrichtung geschoben werden kann, obwohl das Endstück noch eine Länge aufweist, die größer ist als die Länge eines Werkstückabschnittes.

Wenn dieser Bearbeitungszustand erreicht ist, wird die nächste Werkstückstange von hinten in die Spannvorrichtung eingeschoben, wobei sie mit ihrer Stirnseite in Anlage mit der rückwärtigen Fläche des Endstückes gerät und dieses weiter durch die Spannvorrichtung hindurchschiebt.

Auf diese Weise lassen sich von dem Endstück weitere Werkstückabschnitte bearbeiten und abtrennen.

Bei dem insoweit bekannten Verfahren ergeben sich jedoch eine ganze Reihe von Nachteilen. So muss das Endstück immer mit einer bestimmten Spannlänge in die Spannvorrichtung eingespannt werden, damit die Spannvorrichtung ihre volle Spannkraft entfalten kann und das Endstück noch sicher gehalten wird. Dies ist insbesondere dann erforderlich, wenn die Spannvorrichtung eine Spannzange aufweist, die durch axiales Aufschieben einer Spannhülse das Endstück verspannt, wie es aus der eingangs erwähnten DE 42 28 708 A1 bekannt ist.

Aber auch bei Backenfuttern, wie sie in der eingangs erwähnten WO 98/08648 offenbart sind, muss das Werkstück mit einer bestimmten Mindestlänge in das Backenfutter eingespannt werden, um ein Verkanten des Backenfutters zu vermeiden.

Hinzu kommt, dass der Werkstückabschnitt noch um ein bestimmtes Maß über die Spannvorrichtung in den Arbeitsraum vorstehen muss, damit der Werkstückabschnitt über seiner ganzen Länge mit dem jeweiligen Werkzeug bearbeitet werden kann.

Ein mit den bekannten Werkzeugmaschinen und nach den bekannten Verfahren noch zu bearbeitendes Endstück muss also eine Länge aufweisen, die mindestens der Länge des Werkstückabschnittes plus einer Spannlänge entspricht, die im Wesentlichen durch die Länge der Spannzange oder der Spannbacken sowie den erforderlichen zusätzlichen Überstand über die Spannvorrichtung bestimmt wird. Kürzere Endstücke können nicht bearbeitet werden.

Dies führt dazu, dass bei dem bekannten Verfahren in der Regel der letzte Werkstückabschnitt, der rein geometrisch noch bearbeitet werden könnte, aus spanntechnischen Gründen dennoch nicht mehr bearbeitet wird, so dass relativ lange Endstücke als Abfall anfallen. Dies ist jedoch nicht nur mit einem hohen zusätzlichen Materialverbrauch, also hohem Verschnitt verbunden, auch die Entsorgung der relativ langen Endstücke bereitet große Probleme.

In dem Fall, in dem die bearbeiteten Werkstückabschnitte über eine Rutsche weitergeleitet werden, können sich die erheblich längeren Endstücke auf der Rutsche verkeilen, so dass der Bearbeitungsprozess unterbrochen werden muss.

Es ist auch nicht möglich, die Endstücke zusammen mit den Spänen zu entsorgen, denn die Endstücke können sich auch im Späneförderer verklemmen, was ebenfalls zu einem Stillstand der Werkzeugmaschine führt.

Ferner haben die Endstücke aufgrund von Toleranzen sowohl bei der Ausgangslänge der Werkstückstangen als auch während der Bearbeitung der einzelnen Werkstückabschnitte unterschiedliche Längen, immer aber sind sie länger als ein Werkstückabschnitt.

Damit ist die Entsorgung dieser Endstücke auch bei solchen Werkzeugmaschinen problematisch, die ein Handhabungssystem für die Werkstückabschnitte besitzen, also fertige Werkstückabschnitte mit einem Greifer erfassen und definiert beispielsweise auf einer Palette ablegen. Die unterschiedlich langen Endstücke lassen sich in der Regel nicht auf dieser Palette lagern, so dass für sie ein gesonderter Ablageraum vorgesehen werden muss.

Neben dem hohen Materialverbrauch hat das bekannte Verfahren also den weiteren Nachteil, dass die Betriebssicherheit der Werkzeugmaschine nicht hinreichend gewährleistet ist, wobei ferner zusätzliche Maßnahmen und Arbeitsschritte ergriffen werden müssen, um die Endstücke sicher aus dem Arbeitsraum herauszubewegen.

Ein weiterer Nachteil bei dem bekannten Verfahren ist darin zu sehen, dass das Endstück undefiniert vorausrutschen kann, wenn es von hinten durch die als nächstes zu bearbeitende Werkstückstange vorgeschoben wird. Bei diesem Vorschieben schlägt nämlich die Werkstückstange gegen das Endstück, woraufhin dieses abprallen und undefiniert nach vorne aus der Spannvorrichtung herausrutschen kann. Dies kann einerseits dazu führen, dass das Endstück vollständig aus der Spannvorrichtung herausfällt und undefiniert in der Werkzeugmaschine landet, was den weiteren Betrieb stören oder unterbrechen kann.

Aber selbst wenn das Endstück nur undefiniert aus der Spannvorrichtung herausgeschoben wird, lässt es sich nicht mehr ohne Weiteres bearbeiten. Die Länge des Werkstückabschnittes wird nämlich in der Regel durch den Vorschub der Werkstückstange bestimmt, eine messtechnische Erfassung des über die Spannvorrichtung überstehenden Werkstückabschnittes erfolgt nicht. Um Probleme mit unterschiedlich langen Werkstückabschnitten bei den Endstücken zu vermeiden, ist es bei den bekannten Verfahren daher erforderlich, die Länge des Werkstückabschnittes messtechnisch zu überprüfen, was aufwendig ist und die Bearbeitungsgeschwindigkeit negativ beeinträchtigt.

Die EP 0 008 050 A1 beschreibt eine Vorrichtung und ein Verfahren zum Verarbeiten von Werkstoffstangen, bei denen die Werkstoffstangen einzeln nacheinander zu einer Endlos-Stange verbunden und diese Endlos-Stange dann der Werkzeugmaschine zugeführt wird. Die Endlos-Stange wird auf einer im Wesentlichen bogenförmigen Bahn geführt, die eine Art Materialpuffer bereitstellt.

Vor diesem Hintergrund liegt der vorliegenden Erfindung die Aufgabe zugrunde, das bekannte Verfahren derart weiterzubilden, dass bei guter Materialausnutzung der Werkstückstangen ein sicherer Betrieb der Werkzeugmaschine möglich ist.

Bei dem eingangs genannten Verfahren wird diese Aufgabe erfindungsgemäß dadurch gelöst, dass im Zusammenhang mit Schritt e) zwischen dem Endstück und der nächsten Werkstückstange eine Verbindung hergestellt wird.

Die der Erfindung zugrunde liegende Aufgabe wird auf diese Weise vollkommen gelöst.

Die Erfinder der vorliegenden Anmeldung haben nämlich erkannt, dass durch die Verbindung mit der nächsten Werkstückstange die Spannlänge des Endstückes sozusagen vergrößert wird. Ein Endstück kann jetzt auch noch bearbeitet werden, wenn es zwar länger als ein Werkstückabschnitt ist, aber nicht zusätzlich noch die volle erforderliche Spannlänge aufweist. Der zusätzlich in der Spannvorrichtung eingeklemmte vordere Abschnitt der nächsten Werkstückstange sorgt nun dafür, dass die Spannvorrichtung richtig schließt und nicht beispielsweise deshalb verkantet, weil in ihrem hinteren Ende keine Werkstückstange vorhanden ist.

Ferner kann dann, wenn die nächste Werkstückstange mit dem Endstück in Kontakt gelangt, dieses Endstück nun nicht mehr vorausrutschen oder gar aus der Spannvorrichtung undefiniert herausfallen.

Ein weiterer Vorteil ist darin zu sehen, dass das zu verwerfende Endstück jetzt eine kürzere Länge als ein Werkstückabschnitt oder aber etwa dessen Länge aufweisen kann, so dass sich keine Probleme bei der nachfolgenden Handhabung der Endstücke ergeben. Diese können wie die fertig bearbeiteten Werkstückabschnitte über Rutschen aus dem Arbeitsraum abgeleitet oder über das übliche Handhabungssystem auf entsprechenden Palettenplätzen abgelegt werden.

Hinzu kommt, dass die Werkstückstangen besser ausgenutzt werden, was insbesondere bei teurem Material von Vorteil ist. Die Verbindung zwischen dem Endstück und dem vorderen Abschnitt der nächsten Werkstückstange muss im Lauf der weiteren Verarbeitung auch nicht wieder gelöst werden, denn das restliche Endstück und der mit ihr verbundene erste Abschnitt der nächsten Werkstückstange werden gemeinsam verworfen.

Die zu verwerfenden Reste können dabei sogar kürzer sein als die Mindest-Spannlänge in der Spannvorrichtung.

Die Erfinder der vorliegenden Anmeldung haben nämlich weiter erkannt, dass das Endstück nur mit einer Rest-Spannlänge in die Spannvorrichtung eingespannt werden muss, wenn die restliche Spannlänge der Spannvorrichtung durch die nachfolgende Werkstückstange belegt wird. Weil die Spannvorrichtung nun sozusagen durchgehend auf eine Werkstückstange trifft, kann die Spannvorrichtung selbst optimal ihre Spannkraft ausnutzen, während das Endstück nur mit einer deutlich geringeren Rest-Spannlänge in der Spannvorrichtung gehalten ist. Diese Rest-Spannlänge ist so zu bemessen, dass der über die Spannvorrichtung in den Arbeitsraum vorstehende Werkstückabschnitt des Endstückes so fest und sicher gehalten wird, dass er mit der erforderlichen Maßgenauigkeit bearbeitet werden kann.

Wenn dieser "letzte" Werkstückabschnitt des Endstückes bearbeitet und abgetrennt wurde, wird die nächste Werkstückstange jetzt gerade so weit vorgeschoben, dass der Rest des Endstückes sowie ein kurzer vorderer Bereich der nächsten Werkstückstange über die Spannvorrichtung vorsteht. Dieser kurze vordere Bereich wird jetzt von der Werkstückstange abgetrennt, so dass als Verschnitt lediglich die Rest-Spannlänge des Endstückes sowie ein kurzes vorderes Stück der nächsten Werkstückstange anfallen.

Erst dadurch, dass das Endstück und die nächste Werkstückstange miteinander verbunden sind, lässt sich diese optimale Ausnutzung der Werkstückstangen realisieren. Ohne die Verbindung wäre die Gefahr viel zu groß, dass ein bis auf seine Rest-Spannlänge aus der Spannvorrichtung herausgeschobenes Werkstück durch den Stoßkontakt mit der nachstoßenden Werkstückstange ganz aus der Spannvorrichtung herausfällt und undefiniert in der Werkzeugmaschine landet.

Dabei ist es bevorzugt, wenn die Verbindung im Wesentlichen auf Zug und Druck belastbar ist.

Hier ist von Vorteil, dass sich derartige, nur oder überwiegend in axialer Richtung wirkende Verbindungen relativ einfach herstellen lassen, da keine Querkräfte aufgenommen werden müssen. Die Erfinder der vorliegenden Anmeldung haben nämlich erkannt, dass an der Verbindung keine oder nur sehr geringe Querkräfte auftreten können, weil die Verbindung zwischen dem Endstück und der nächsten Werkstückstange nämlich in der Spannvorrichtung eingespannt ist, wo Querbewegungen durch die Spannvorrichtung selbst verhindert werden.

In einem Ausführungsbeispiel ist es dann bevorzugt, wenn die Verbindung eine kraftschlüssige Verbindung, vorzugsweise eine Klebeverbindung ist.

Bei dieser Maßnahme ist von Vorteil, dass die Verbindung sehr preiswert und mit sehr geringem Aufwand hergestellt werden kann. Beispielsweise ist es möglich, während der Bearbeitung Kleber auf die Stirnseite der nachfolgenden Werkstückstange aufzubringen, so dass das Endstück bei Kontakt mit der nachfolgenden Werkstückstange an dieser festklebt. Es ist auch denkbar, bereits vor Bearbeitungsbeginn auf die Stirnseiten der Werkstückstangen Kleber aufzubringen, eine Art Doppelklebeband aufzukleben oder auch Klettverschlussteile anzubringen. Mit anderen Worten bedeutet dies, dass die Werkstückstangen an einer oder an beiden Stirnseiten mit entsprechenden Klebemitteln versehen werden, die bei Kontakt mit der rückwärtigen Stirnseite des jeweiligen Endstückes für eine zugfeste Verbindung zwischen dem Endstück und der nachfolgenden Werkstückstange sorgen.

Es ist aber auch möglich, das Endstück durch die gegebenenfalls vorhandene weitere Vorrichtung zunächst aus der Spannvorrichtung zu entnehmen, die nachfolgende Werkstückstange aus der Spannvorrichtung herauszuschieben und dann mit dem Endstück zu verkleben, indem beispielsweise Sekundenkleber aufgebracht wird.

In einem anderen Ausführungsbeispiel ist es bevorzugt, wenn die Verbindung eine stoffschlüssige Verbindung, vorzugsweise eine Punktschweißverbindung ist.

Hier ist von Vorteil, dass eine sehr feste Verbindung zwischen der nachfolgenden Werkstückstange und dem Endstück hergestellt wird.

Wie bereits oben beschrieben, wird zu diesem Zweck das Endstück mit der Vorrichtung aus der Spannvorrichtung entnommen, die nächste Werkstückstange vorgeschoben und mit dem Endstück verschweißt, bevor das Endstück zusammen mit der nun mit ihr verbundenen Werkstückstange in die Spannvorrichtung zurückgeschoben oder zurückgezogen wird, bis nur noch mindestens der Werkstückabschnitt des Endstückes in den Arbeitsraum vorsteht.

In einem anderen Ausführungsbeispiel ist es bevorzugt, wenn die Verbindung eine formschlüssige Verbindung ist.

Bei dieser Maßnahme ist von Vorteil, dass formschlüssige Verbindungen sehr hohe Zugkräfte aufnehmen können, aber dennoch sehr einfach und schnell herzustellen sind.

Die formschlüssige Verbindung kann beispielsweise durch ein Formelement hergestellt werden, das mit dem Endstück und der nächsten Werkstückstange in Eingriff gebracht wird.

Dieses Formelement kann beispielsweise eine Klammer oder ein Sprengring sein, die bzw. der in Löcher bzw. auf Vorsprünge geklemmt wird, die entweder vor Bearbeitungsbeginn oder im laufenden Betrieb im Bereich der Stirnseiten an den Werkstückstangen ausgebildet werden. Wenn die Bearbeitung an den Stirnseiten im laufenden Betrieb erfolgt, wird die bereits oben erwähnte Vorrichtung benötigt, die das Endstück aus der Spannvorrichtung entnehmen und für eine nachfolgende Bearbeitung der sechsten Seite der Arbeitsspindel zur Verfügung stellen kann.

Die Einrichtung zum Applizieren des Formelementes kann dabei entweder in die Werkzeugaufnahme der Arbeitsspindel einspannbar sein, oder es kann eine separate Einrichtung vorgesehen sein, die in dem Bereich der Stoßstelle zwischen Endstück und nächster Werkstückstange zugestellt werden kann.

Mit anderen Worten, die formschlüssige Verbindung wird durch ein Formelement hergestellt, das durch eine zusätzlich an der Werkzeugmaschine vorgesehene Einrichtung dann appliziert wird, wenn das Endstück in der Vorrichtung und die nächste Werkstückstange in der Spannvorrichtung so gehalten werden, dass sie stirnseitig aneinanderliegen.

Andererseits kann die formschlüssige Verbindung auch durch an dem Endstück und der nächsten Werkstückstange ausgebildete Rastelemente hergestellt werden.

Auf diese Weise wird das zusätzliche Formelement vermieden, wobei ferner auf die Einrichtung zum Anbringen des Formelementes verzichtet werden kann.

Das Rastelement kann dabei im Zusammenhang mit Schritt e) an dem Endstück und der nächsten Werkstückstange ausgebildet werden.

Wie bereits erwähnt, wird hierzu das Endstück mit der Vorrichtung aus der Spannvorrichtung entnommen und die nächste Werkstückstange so weit vorgeschoben, dass sie im Bereich ihres vorderen Abschnittes mit Hilfe eines in die Arbeitsspindel eingespannten Werkzeuges bearbeitet werden kann. Der hintere Bereich des Endstückes wird dann entsprechend bearbeitet. Danach werden Endstück und Werkstückstange zusammengeschoben, so dass sie miteinander verrasten, und dann zurück in die Spannvorrichtung geschoben oder gezogen, so dass das Endstück mit seinem verbliebenen Werkstückabschnitt übersteht und bearbeitet werden kann.

Andererseits können die Rastelemente an den Werkstückstangen auch ausgebildet werden, bevor die Bearbeitung der Werkstückabschnitte der Werkstückstangen erfolgt.

Auf diese Weise wird das zwischenzeitliche Herausnehmen des Endstückes aus der Spannvorrichtung vermieden. Durch das Vorschieben der nächsten Werkstückstange verrastet es mit dem Endstück, so dass die erforderliche Zugverbindung hergestellt wird.

Bei einer Werkzeugmaschine kann dementsprechend eine Einrichtung zum Punktschweißen, zum Applizieren von Kleber oder eines Formelementes in die Arbeitsspindel eingespannt werden, wobei auch eine separate Einrichtung vorgesehen sein kann, die entsprechend zustellbar ist. Die Einrichtung kann auch eine zusätzliche Haltevorrichtung umfassen, die das Verrasten von Endstück und nächster Werkstückstange ermöglicht. Diese Haltevorrichtung kann zusätzlich zur Spannvorrichtung vorgesehen sein und das Endstück bei geöffneter Spannvorrichtung halten, so dass die nächste Werkstückstange vorgeschoben und mit dem Endstück verrastet werden kann, ohne dass die Gefahr besteht, dass das Endstück weiter aus der Spannvorrichtung herausgeschoben wird. Nach dem Verrasten wird die Haltevorrichtung gelöst und die Werkstückstange so weit vorgeschoben, dass das Endstück mit seinem nächsten Werkstückabschnitt über die Spannvorrichtung übersteht und bearbeitet werden kann.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: ein erstes Ausführungsbeispiel einer Werkzeugmaschine, auf der das erfindungsgemäße Verfahren durchgeführt werden kann;
- Fig. 2: eine Darstellung wie Fig. 1, jedoch mit geschwenkter Spannvorrichtung;
- Fig. 3: ein weiteres Ausführungsbeispiel einer Werkzeugmaschine, auf der das erfindungsgemäße Verfahren durchgeführt werden kann, in schematischer Seitenansicht;
- Fig. 4: eine schematische Darstellung der Spannvorrichtung mit eingeklemmter Werkstückstange, wobei Werkstückabschnitt, Spannlänge und Rest-Spannlänge sowie Mindest-Spannlänge erläutert sind;
- Fig. 5: eine Darstellung wie Fig. 3, jedoch für ein Endstück, das mit der nachfolgenden Werkstückstange verbunden ist;
- Fig. 6: ein Beispiel für die Verbindung von Endstück und Werkstückstange mit Hilfe eines Formelementes;
- Fig. 7: eine Darstellung wie Fig. 6, jedoch für ein anderes ausgestaltetes Formelement;
- Fig. 8: die Verbindung zwischen einem Endstück und einer Werkstückstange durch ein Rastelement;
- Fig. 9: eine Darstellung wie Fig. 8, jedoch mit einem weiteren Ausführungsbeispiel für die Rastelemente; und
- Fig. 10: eine schematische Draufsicht auf eine Spannvorrichtung mit einer zusätzlichen Haltevorrichtung, um in der Spannvorrichtung das Endstück und die Werkstückstange miteinander zu verrasten.

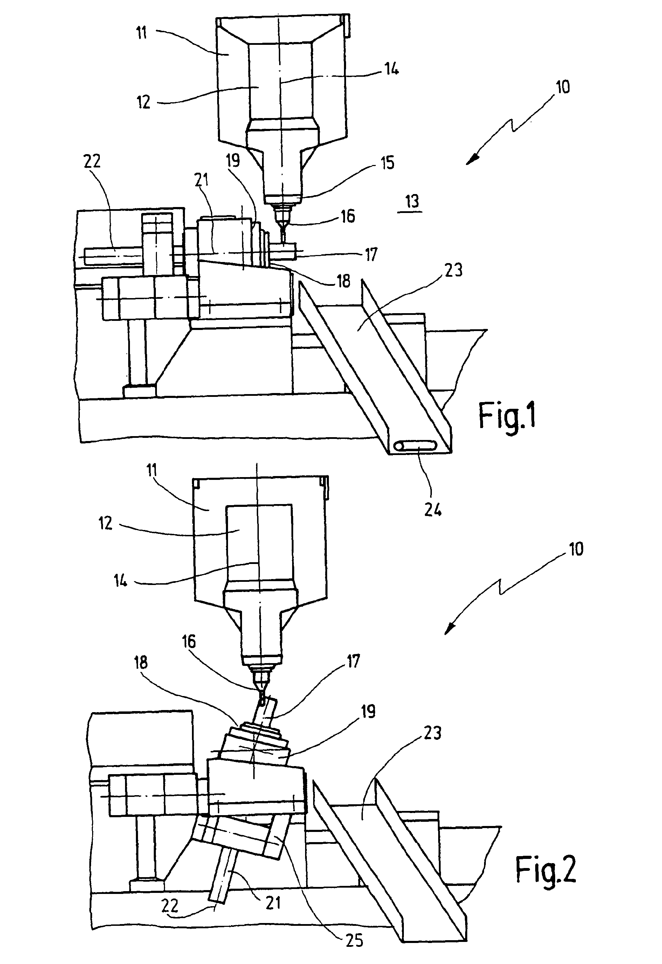

In Fig. 1 ist mit 10 eine Werkzeugmaschine bezeichnet, an deren Fahrständer 11 ein Spindelkopf höhenverstellbar gelagert ist. Der Spindelkopf 12 kann auf diese Weise in einem Arbeitsraum 13 in allen drei Raumrichtungen verfahren werden.

Der Spindelkopf 12 trägt eine um eine Spindelachse 14 drehbar angetriebene Arbeitsspindel 15, in die auf übliche Weise unterschiedliche Bearbeitungswerkzeuge 16 eingespannt werden können, um Werkstückabschnitte 17 zu bearbeiten, die in eine Spannvorrichtung 18 eingespannt sind.

Die Spannvorrichtung 18 ist mit Drehantrieb 19 verbunden, um die Werkstückabschnitte 17 um eine Drehachse 21 zu verdrehen, so dass die Werkstückabschnitte 17 an ihren vier Längsseiten bearbeitet werden können. Es ist auch möglich, die Werkstückabschnitte 17 mit Hilfe des Drehantriebes so in Rotation zu versetzen, dass eine Drehbearbeitung möglich ist, wobei dann in die stehende Arbeitsspindel 15 ein Drehwerkzeug 16 eingesetzt ist. Auf diese Weise ist die Werkzeugmaschine 10 sowohl für Fräsbearbeitung als auch für Drehbearbeitung von Werkstückabschnitten 17 einsetzbar.

Die Werkstückabschnitte 17 werden nun von einer Werkstückstange 22 bearbeitet, die von hinten durch die Spannvorrichtung 18 durchgeschoben ist, so dass an ihrem vorderen Ende zumindest der Werkstückabschnitt 17 in den Arbeitsraum 13 übersteht und dort bearbeitet werden kann. Die Werkstückstange 22 kann dabei beliebige Querschnittformen aufweisen, an die die Spannvorrichtung 18 entsprechend angepasst ist.

Wenn ein Werkstückabschnitt 17 fertig bearbeitet ist, wird er durch ein geeignetes Bearbeitungswerkzeug 16 oder auch eine gesondert vorgesehene Kappsäge von der Werkstückstange 22 abgetrennt und über eine Rutsche 23 aus dem Arbeitsraum 13 entfernt. In Fig. 1 ist unten auf der Rutsche ein fertig bearbeitetes Werkstück 24 angedeutet.

Um die Stirnseite des Werkstückabschnittes 17 bearbeiten zu können, ist die Spannvorrichtung 18 auf einem in Fig. 2 zu erkennenden Schwenkhalter 25 gelagert, durch den die Drehachse 21 so weit verschwenkt werden kann, bis sie nahezu mit der Spindelachse 14 fluchtet.

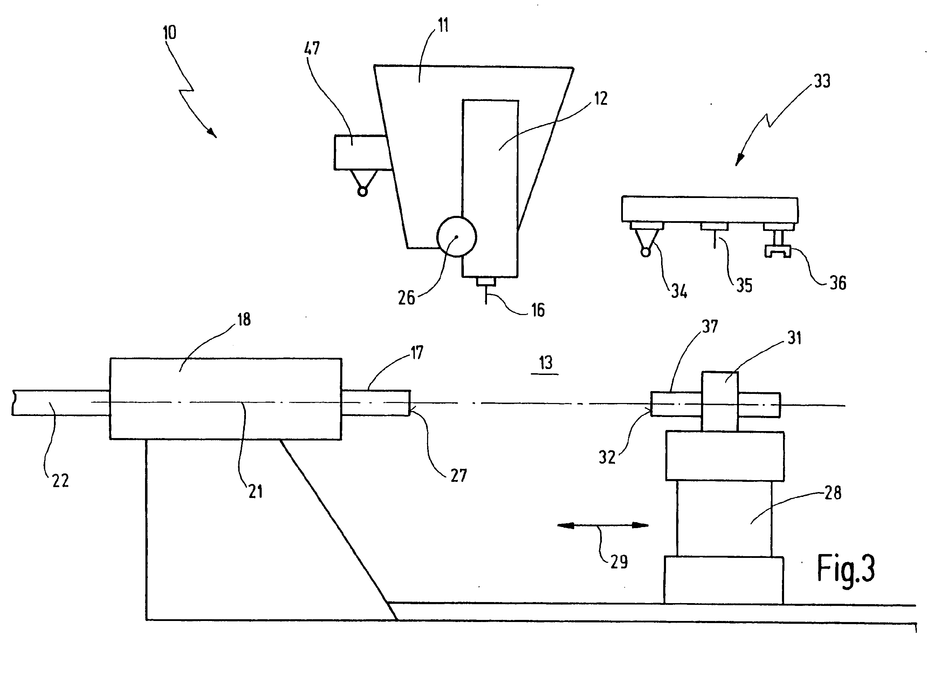

Alternativ oder zusätzlich zu der Spannvorrichtung 18 kann auch der Spindelkopf 12 schwenkbar ausgelegt sein, wie dies jetzt im Zusammenhang mit Fig. 3 erläutert wird.

Die Werkzeugmaschine 10 aus Fig. 3 ist ebenfalls nur schematisch dargestellt, sie umfasst wieder den Fahrständer 11 sowie den Spindelkopf 12, der jetzt um eine bei 26 angedeutete Drehachse in dem Arbeitsraum 13 verschwenkt werden kann, um den Werkstückabschnitt 17 an seiner Stirnseite 27 bearbeiten zu können.

Zusätzlich zu der Spannvorrichtung 18 ist bei der Werkzeugmaschine 10 eine Vorrichtung 28 vorgesehen, die in Richtung der Drehachse 21 verschiebbar ist, was durch einen Pfeil 29 angedeutet wird.

Die Vorrichtung 28 weist eine Klemmeinheit 31 auf, in die ein Werkstückabschnitt 17 oder ein noch zu erläuterndes Endstück 37 eingespannt werden kann. Auf diese Weise ist der Werkstückabschnitt 17 auch an seiner sechsten Seite 32 für eine Bearbeitung durch ein Bearbeitungswerkzeug 16 zugänglich. Ferner können am Endstück 37 beispielsweise Fräsarbeiten durchgeführt werden, bevor es wieder zurück in die Spannvorrichtung 18 geschoben wird.

Neben dem Fahrständer 11 ist ein schematisch angedeutetes Werkzeugmagazin 33 vorgesehen, in dem verschiedene Bearbeitungswerkzeuge 34, 35, 36 gespeichert sind, die wahlweise in die Arbeitsspindel 15 eingesetzt werden können.

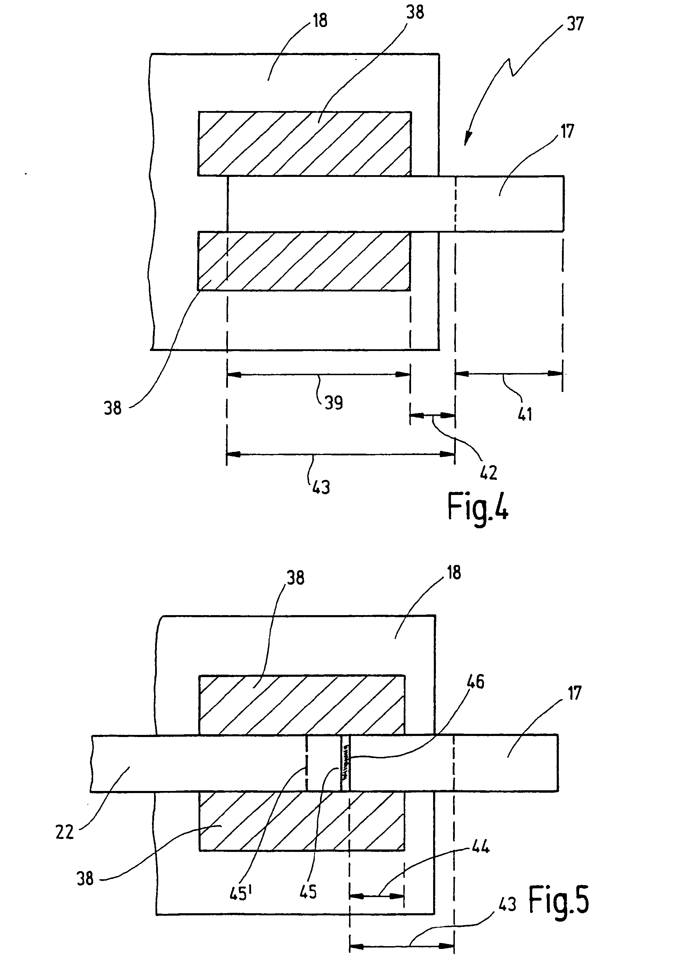

Mit den Werkzeugmaschinen aus Fig. 1 oder 3 werden jetzt von einer Werkstückstange 22 nacheinander Werkstückabschnitte 17 bearbeitet und abgetrennt, so dass die Werkstückstange 22 immer kürzer wird, bis noch ein Endstück 37 übrig bleibt, dessen Einspannsituation in die Spannvorrichtung 18 in Fig. 4 schematisch gezeigt ist.

Das Endstück 37 wird durch zwei Spannbacken 38 gehalten, in denen es mit seinem hinteren Abschnitt mit einer Mindest-Spannlänge gehalten ist, die bei 39 angedeutet ist. Würde das Endstück 37 mit einem kürzeren Abschnitt in den Spannbacken 38 sitzen, so könnten die Spannbacken 38 verkippen, so dass das Endstück 37 nicht mehr hinreichend sichtbar gehalten wird.

Die gesamte Länge des Endstückes 37 setzt sich aus dieser Mindest-Spannlänge 39, der bei 41 angedeuteten Länge des Werkstückabschnittes 17 sowie einem Überstand 42 zusammen, um den der Werkstückabschnitt 17 über die Spannbacken 38 vorstehen muss, um im Arbeitsraum 13 sicher bearbeitet werden zu können. Die Mindest-Spannlänge 39 und der Überstand 42 bestimmen die Spannlänge 43, um die das Endstück 37 länger als ein Werkstückabschnitt 17 sein muss, damit der Werkstückabschnitt 17 noch bearbeitet werden kann.

In Fig. 5 ist in einer Darstellung wie Fig. 4 ein Zustand gezeigt, bei dem ein Endstück 37 mit der folgenden Werkstückstange 22 verbunden ist und nur über eine Rest-Spannlänge 44 in den Spannbacken 38 gehalten ist. Diese Rest-Spannlänge 44 ist so gewählt, dass das Endstück 37 noch sicher zwischen den Spannbacken 38 gehalten wird, so dass der Werkstückabschnitt 17 mit hinreichender Genauigkeit bearbeitet werden kann. Dies ist möglich, weil hinter dem Endstück 37 zwischen den Spannbacken 38 die nächste Werkstückstange 22 mit ihrem vorderen Abschnitt 45 sitzt, so dass die Spannbacken 38 nicht verkanten können.

Auf diese Weise ist also die nicht für eine Bearbeitung zur Verfügung stehende Spannlänge 43 deutlich kürzer als bei dem Beispiel aus Fig. 4.

Zwischen dem Endstück 37 und dem vorderen Abschnitt 45 ist eine Verbindung 46 vorgesehen, die kraftschlüssig sein und durch Klebstoff, Doppelklebeband, Klettverbindung oder ähnliches hergestellt werden kann. Nur aufgrund dieser Verbindung 46 ist es möglich, das Endstück 37 so weit aus der Spannvorrichtung 18 herauszuschieben, dass es nur noch mit seiner Rest-Spannlänge 44 in den Spannbacken 38 gehalten wird. Die Verbindung 46 verhindert es nämlich, dass das Endstück 37 beim Vorschieben mit Hilfe der Werkstückstange 22 undefiniert vorausrutscht oder gar aus der Spannvorrichtung 18 herausfällt.

Wenn der Werkstückabschnitt 17 dann entsprechend bearbeitet wurde, wird er abgetrennt und die Werkstückstange 22 so weit vorgeschoben, bis das Endstück 37 mit seiner verbliebenen Spannlänge 43 sowie der vordere Bereich 45 der Werkstückstange 22 über die Spannvorrichtung 38 überstehen. Der vordere Bereich 45 wird dann an der gestrichelten Linie 45' abgetrennt, so dass sich ein Verschnittstück ergibt, das aus der Spannlänge 43 des Endstückes 37 sowie dem vorderen Bereich 45 besteht. Dieses Verschnittstück ist nicht nur erheblich kürzer als das gemäß Fig. 4 zu verwerfende Endstück 37, es ist auch noch einmal deutlich kürzer als das schon deutlich kürzere Endstück 37, das gemäß dem Ausführungsbeispiel der Fig. 5 verwendet werden kann. Insgesamt ergibt sich also eine deutliche Materialersparnis.

Die Verbindung 46 kann beispielsweise dadurch hergestellt werden, dass die Werkstückstangen 22 vor Bearbeitungsbeginn an ihren Stirnseiten jeweils mit einer Kleberschicht, einem Stück Klebeband oder ähnlichem versehen werden. Wenn die nächste Werkstückstange 22 dann mit einem Endstück 37 in Anlage gelangt, verkleben die beiden Stangen so miteinander.

Es ist aber auch möglich, das Endstück 37 durch die aus Fig. 3 bekannte Vorrichtung 28 aus der Spannvorrichtung 18 zu entnehmen und die Werkstückstange 22 so weit vorzuschieben, dass sie mit ihrem vorderen Abschnitt 45 aus der Spannvorrichtung 18 herausschaut. Auf die aufeinander zu weisenden Stirnseiten 32, 27 von Endstück 37 sowie Werkstückstange 22 wird dann Klebstoff aufgetragen, wozu beispielsweise das Werkzeug 34 eingesetzt werden kann, das im vorliegenden Fall dann eine Klebepistole ist. Durch Verschieben der Vorrichtung 28 werden die Stirnseiten von Werkstückstange 22 und Endstück 17 dann aufeinandergedrückt und miteinander verklebt. Danach wird das Endstück 37 und mit ihm die Werkstückstange 22 wieder so weit in die Spannvorrichtung 18 hineingeschoben, dass nur noch der Werkstückabschnitt 17 hinreichend über die Spannvorrichtung 18 vorsteht und bearbeitet werden kann.

Die Verbindung 46 kann statt als Klebeverbindung auch als Punktschweißverbindung ausgebildet werden. Hierzu wird das Endstück 37 wiederum in die Vorrichtung 28 eingespannt, wobei die Verbindung zwischen Werkstückstange 22 und Endstück 37 jetzt mit Hilfe eines in Fig. 3 bei 47 angedeuteten Schweißgerätes erfolgt, das beispielsweise am Fahrständer 11 angebracht und durch diesen bewegt werden kann. Selbstverständlich ist es auch möglich, das Schweißgerät 47 mit einer eigenen Zustellvorrichtung zu versehen, oder aber eine entsprechende Schweißspitze als Werkzeug in die Arbeitsspindel 12 einzusetzen.

Während die Klebeverbindung im Wesentlichen auf Zug und Druck belastbar ist, was für eine sichere Handhabung des Endstückes 37 völlig ausreichend ist, bietet eine Schweißverbindung zusätzlich die Möglichkeit, Querkräfte aufzunehmen.

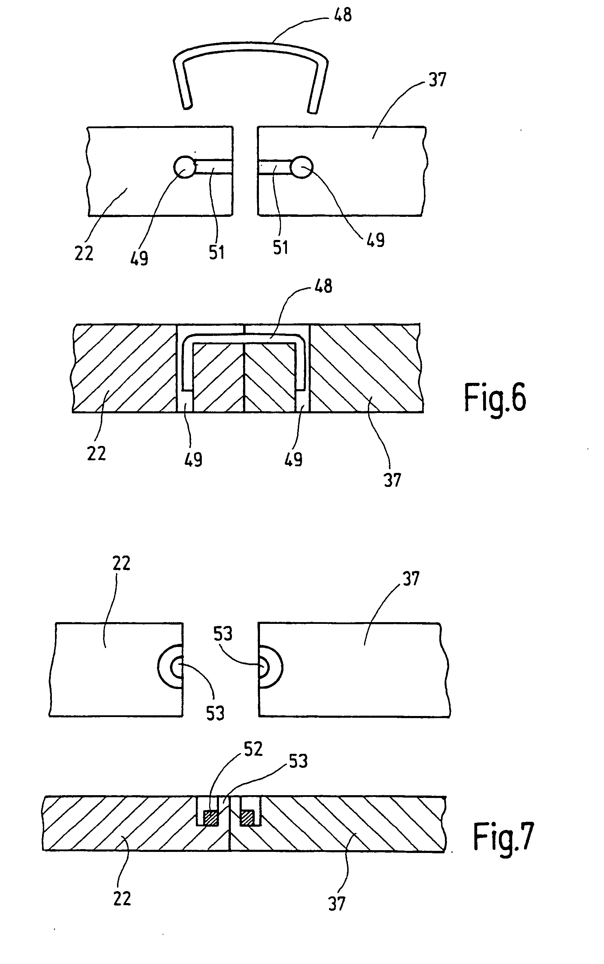

In Fig. 6 oben ist ein weiteres Beispiel für die Verbindung 46 zwischen Endstück 37 und Werkstückstange 22 gezeigt. Hier dient ein Formelement 48 in Form einer Klammer dazu, eine formschlüssige Verbindung herzustellen, die im Wesentlichen auf Zug und Druck belastbar ist. Zu diesem Zweck sind sowohl in dem Endstück 37 als auch in dem vorderen Bereich 45 der Werkstückstange 22 Durchgangslöcher 49 vorgesehen, von denen sich eine Nut 51 zur jeweiligen Stirnseite erstreckt.

In Fig. 6 unten ist zu erkennen, dass das Formelement 48 vollständig in den Nuten 51 sowie den Durchgangslöchern 49 zu liegen kommt, so dass es nicht über die Kontur von Endstück 37 bzw. Werkstückstange 22 vorsteht und beim Einspannen in die Spannvorrichtung 18 nicht stört.

Zum einen ist es hier möglich, dass die Werkstückstangen 22 an ihren jeweiligen Stirnseiten bereits mit entsprechenden Durchgangslöchern 49 und Nuten 51 versehen sind, so dass während der Bearbeitung der Werkstückstangen 22 lediglich noch das Formelement 48 eingesetzt werden muss. Dies erfolgt wiederum bei dem in Fig. 3 gezeigten Zustand, wo das Endstück 37 in der Vorrichtung 28 eingespannt ist und die Werkstückstange 22 über die Spannvorrichtung 18 überschaut. Die Stirnseiten werden miteinander in Anlage gebracht und dann das Formelement 48 eingesetzt, wozu eine Klammereinrichtung 36 als eine Art Bearbeitungswerkzeug in die Arbeitsspindel 12 eingesetzt werden kann. Natürlich ist es auch möglich, die Klammereinrichtung 36 mit einer eigenen Zustellvorrichtung zu versehen.

Wenn die Werkstückstangen 22 nicht bereits vorher mit den entsprechenden Durchgangslöchern 49 und Nuten 51 versehen wurden, können sie auch nachträglich entsprechend bearbeitet werden, wenn nämlich das Endstück 37 von der Vorrichtung 28 und die Werkstückstange 22 von der Spannvorrichtung 18 gehalten werden, wie es in Fig. 3 gezeigt ist.

Ein weiteres Beispiel für eine formschlüssige Verbindung ist in Fig. 7 gezeigt, wo ein Sprengring 52 verwendet wird, um zwei im Querschnitt jeweils halbkreisförmige Zapfen 53 an dem Endstück 37 und der Werkstückstange 22 miteinander zu verklemmen.

Es ist auch möglich, das Endstück 37 und die Werkstückstange 22 mit Hilfe von Rastelementen miteinander zu verbinden, wozu beispielsweise an der Werkstückstange 22 ein Zapfen 54 mit Kopf vorgesehen sein kann, der in eine entsprechende Ausnehmung 55 an dem Endstück 37 einrastet.

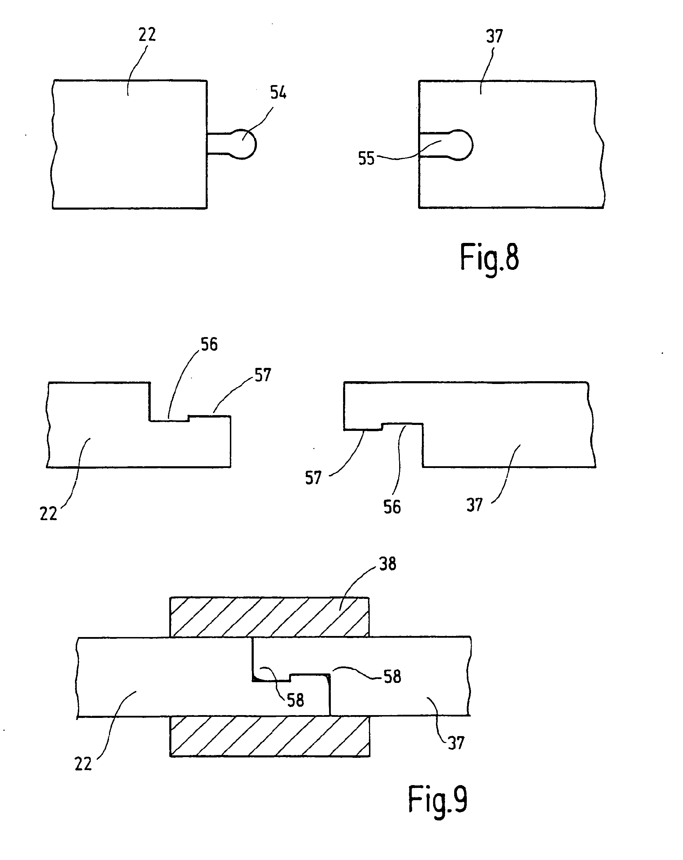

Eine weitere Möglichkeit für eine formschlüssige Verbindung ist in Fig. 9 gezeigt, wobei sowohl an der Werkstückstange 22 als auch an dem Endstück 37 zueinander komplementär jeweils eine Aussparung 56 sowie ein Vorsprung 57 vorgesehen sind, die auf Zug belastbar sind, wenn seitlich durch die Spannbacken 38 Kraft ausgeübt wird. Damit Werkstückstange 22 und Endstück 37 beim Aufeinanderzuschieben miteinander verrasten, können stirnseitig an den Vorsprüngen 37 noch Fasen 58 vorgesehen sein.

Die formschlüssige Verrastung gemäß den Ausführungsbeispielen in den Fig. 8 und 9 erfolgt beispielsweise dadurch, dass das Endstück 37 wieder in der Vorrichtung 28 und die Werkstückstange 22 in der Spannvorrichtung 18 gehalten werden, woraufhin dann die Vorrichtung 28 auf die Spannvorrichtung 18 zu bewegt wird, bis Endstück 17 und Werkstückstange 22 miteinander verrastet sind.

Natürlich ist es auch möglich, Werkstückstange 22 und Endstück 17 bereits in der Spannvorrichtung 18 miteinander zu verrasten, wozu es lediglich erforderlich ist, dass beispielsweise durch die Vorrichtung 28 verhindert wird, dass während des Verrastens das Endstück 37 weiter aus der Spannvorrichtung 18 herausgeschoben wird.

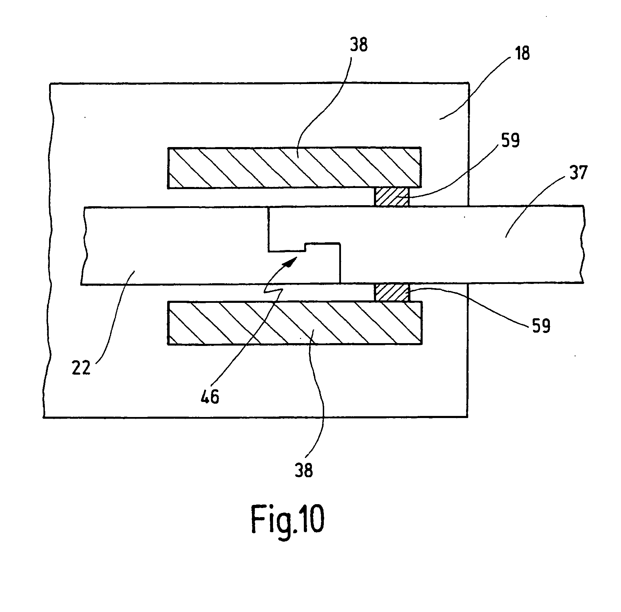

In einem weiteren Ausführungsbeispiel ist in der Spannvorrichtung 18 neben den Spannbacken 38 jedoch eine zusätzliche Haltevorrichtung 59 vorgesehen, wie dies in Fig. 10 zu sehen ist. Die zusätzliche Haltevorrichtung 59 hält bei geöffneten Spannbacken 38 das Endstück 37 fest, während von links die Werkstückstange 22 vorgeschoben wird, so dass sie mit dem Endstück 37 verrastet und die Verbindung 46 bildet, die im gezeigten Ausführungsbeispiel die formschlüssige Verbindung aus Fig. 9 ist. Sobald die Verbindung 46 hergestellt wurde, werden die Spannbacken 38 so weit geschlossen, dass eine Querbewegung von Endstück 37 und Werkstückstange 22 zueinander nicht mehr erfolgen kann, aber noch eine Bewegung in Längsrichtung möglich ist, so dass das Endstück 37 jetzt so weit aus der Spannvorrichtung 18 herausgeschoben werden kann, bis sein Werkstückabschnitt 17 hinreichend in den Arbeitsraum 13 hineinragt.

## Patentansprüche

1. Verfahren zum Bearbeiten von Werkstückstangen (22) auf einer Werkzeugmaschine (10) mit einer relativ zu einer Spannvorrichtung (18) für die Werkstückstangen (22) verfahrbaren Arbeitsspindel (15), in die Bearbeitungswerkzeuge (16, 34, 35, 36) einspannbar sind, mit den Schritten:
a) Einspannen einer Werkstückstange (22) in die Spannvorrichtung (18) derart, dass zumindest ein zu bearbeitender Werkstückabschnitt (17) der Werkstückstange (22) über die Spannvorrichtung (18) übersteht,
b) Bearbeiten des Werkstückabschnittes (17) mit zumindest einem Bearbeitungswerkzeug (16),
c) Abtrennen des insoweit bearbeiteten Werkstückabschnittes (17) von der restlichen Werkstückstange (22),
d) Vorschieben der restlichen Werkstückstange (22), bis zumindest ein neuer Werkstückabschnitt (17) über die Spannvorrichtung (18) übersteht, und erneutes Einspannen der Werkstückstange (22),
e) Wiederholen der Schritte b) bis d), bis ein Endstück (37) der in Bearbeitung befindlichen Werkstückstange (22) entsteht, das mit Hilfe der als nächstes zu bearbeitenden Werkstückstange (22) vorgeschoben wird,
**dadurch gekennzeichnet, dass** im Zusammenhang mit Schritt e) zwischen dem Endstück (37) und der nächsten Werkstückstange (22) eine Verbindung (46 48, 52, 54, 55, 56, 57) hergestellt wird.

2. Verfahren nach Anspruch 1, **dadurch gekennzeichnet, dass** die Verbindung (46) im Wesentlichen auf Zug und Druck belastbar ist.

3. Verfahren nach Anspruch 1, **dadurch gekennzeichnet, dass** die Verbindung (46) eine kraftschlüssige Verbindung, vorzugsweise eine Klebeverbindung ist.

4. Verfahren nach Anspruch 1, **dadurch gekennzeichnet, dass** die Verbindung (46) eine stoffflüssige Verbindung, vorzugsweise eine Punktschweißverbindung ist.

5. Verfahren nach Anspruch 1 oder 2, **dadurch gekennzeichnet, dass** die Verbindung (46) eine formschlüssige Verbindung ist.

6. Verfahren nach Anspruch 5, **dadurch gekennzeichnet, dass** die formschlüssige Verbindung (46) durch ein Formelement (48, 52) hergestellt wird, das mit dem Endstück (37) und der nächsten Werkstückstange (22) in Eingriff gebracht wird.

7. Verfahren nach Anspruch 5, **dadurch gekennzeichnet, dass** die formschlüssige Verbindung (46) durch an dem Endstück (37) und der nächsten Werkstückstange (22) ausgebildete Rastelemente (54, 55, 56, 57) hergestellt wird.

8. Verfahren nach Anspruch 7, **dadurch gekennzeichnet, dass** die Rastelemente (54, 55; 56, 57) im Zusammenhang mit Schritt e) an dem Endstück (37) oder der nächsten Werkstückstange (22) ausgebildet werden.

9. Verfahren nach Anspruch 7, **dadurch gekennzeichnet, dass** die Rastelemente (54, 55; 56, 57) an der Werkstückstange (22) ausgebildet werden, bevor die Bearbeitung der Werkstückabschnitte (17) der Werkstückstange (22) erfolgt.

## Claims

1. Method for machining workpiece rods (22) on a machine tool (10) having a working spindle (15), which can be moved relative to a work fixture (18) for the workpiece rods (22), and into which machining tools (16, 34, 35, 36) can be clamped, comprising the following steps:
a) clamping a workpiece rod (22) into the work fixture (18) in such a manner, that at least a workpiece section (17) of the workpiece rod (22), which workpiece section (17) is to be machined, protrudes over the work fixture (18),
b) machining the workpiece section (17) with at least one machining tool (16),
c) severing the workpiece section (17) machined so far from the rest of the workpiece rod (22),
d) pushing the rest of the workpiece rod (22) forward until at least a new workpiece section (17) protrudes over the work fixture (18), and again clamping the workpiece rod (22),
e) repeating steps b) to d) until an end piece (37) of the workpiece rod (22) being machined is produced, which end piece is pushed forward with the aid of the workpiece rod (22), which is to be machined next,
**characterized in that** a connection (46, 48, 52, 54, 55, 56, 57) is established between the end piece (37) and the next workpiece rod (22) in conjunction with step e).

2. Method according to claim 1, **characterized in that** the connection (46) can be loaded essentially in tension and compression.

3. Method according to claim 1, **characterized in that** the connection (46) is a non-positive connection, preferably an adhesive connection.

4. Method according to claim 1, **characterized in that** the connection (46) is a connection formed by a fluidified material, preferably a spot welding connection.

5. Method according to claim 1 or 2, **characterized in that** the connection (46) is a positive connection.

6. Method according to claim 5, **characterized in that** the positive connection (46) is established by a moulded element (48, 52) which is brought into engagement with the end piece (37) and the next workpiece rod (22).

7. Method according to claim 5, **characterized in that** the positive connection (46) is established by latching elements (54, 55; 56, 57) formed on the end piece (37) and the next workpiece rod (22).

8. Method according to claim 7, **characterized in that** the latching elements (54, 55; 56, 57) are formed on the end piece (37) or the next workpiece rod (22) in conjunction with step e).

9. Method according to claim 7, **characterized in that** the latching elements (54, 55; 56, 57) are formed on the workpiece rod (22), before the machining of the workpiece sections (17) of the workpiece rod (22) takes place.

## Revendications

1. Procédé d'usinage de barres de pièce (22) sur une machine-outil (10) dotée d'une broche de travail (15) mobile par rapport à un dispositif de serrage (18) pour les barres de pièce (22), dans laquelle des outils d'usinage (16, 34, 35, 36) peuvent être serrés, comportant les étapes consistant à :
a) serrer une barre de pièce (22) dans le dispositif de serrage (18) de telle sorte qu'au moins une partie de la pièce (17) à usiner de la barre de pièce (22) dépasse du dispositif de serrage (18),
b) usiner la partie de la pièce (17) avec au moins un outil d'usinage (16),
c) séparer la partie de la pièce (17) usinée jusque-là du reste de la barre de pièce (22),
d) avancer le reste de la barre de pièce (22) jusqu'à ce qu'au moins une nouvelle partie de la pièce (17) dépasse du dispositif de serrage (18), et serrer une nouvelle fois la barre de pièce (22),
e) répéter les étapes b) à d) jusqu'à ce qu'une extrémité (37) de la barre de pièce (22) en cours d'usinage soit formée, laquelle extrémité est avancée à l'aide de la prochaine barre de pièce (22) à usiner,
**caractérisé en ce qu'**une liaison (46, 48, 52, 54, 55, 56, 57) est établie en relation avec l'étape e) entre l'extrémité (37) et la prochaine barre de pièce (22).

2. Procédé selon la revendication 1, **caractérisé en ce que** la liaison (46) peut être soumise essentiellement à des efforts de traction et de compression.

3. Procédé selon la revendication 1, **caractérisé en ce que** la liaison (46) est une liaison de force, de préférence une liaison collée.

4. Procédé selon la revendication 1, **caractérisé en ce que** la liaison (46) est une liaison de matière de préférence une liaison par soudage par points.

5. Procédé selon la revendication 1 ou 2, **caractérisé en ce que** la liaison (46) est une liaison par correspondance de forme.

6. Procédé selon la revendication 5, **caractérisé en ce que** la liaison par correspondance de forme (46) est établie par un élément moulé (48, 52), qui est amené en prise avec l'extrémité (37) et la prochaine barre de pièce (22).

7. Procédé selon la revendication 5, **caractérisé en ce que** la liaison par correspondance de forme (46) est établie par un élément d'encliquetage (54, 55, 56, 57) réalisé au niveau de l'extrémité (37) et de la prochaine barre de pièce (22).

8. Procédé selon la revendication 7, **caractérisé en ce que** les éléments d'encliquetage (54, 55 ; 56, 57) sont réalisés en relation avec l'étape e) au niveau de l'extrémité (37) ou de la prochaine barre de pièce (22).

9. Procédé selon la revendication 7, **caractérisé en ce que** les éléments d'encliquetage (54, 55 ; 56, 57) sont réalisés au niveau de la barre de pièce (22), avant l'usinage des parties de pièce (17) de la barre de pièce (22).
